(19) Europäisches Patentamt

European Patent Office

Office européen des brevets

(11) **EP 4 306 367 B1**

(12) **EUROPEAN PATENT SPECIFICATION**

(45) Date of publication and mention
of the grant of the patent:
**10.12.2025 Bulletin 2025/50**

(21) Application number: **22382658.7**

(22) Date of filing: **12.07.2022**

(51) International Patent Classification (IPC):
**B60R 16/03** *(2006.01)* **H01Q 1/02** *(2006.01)*
**H01Q 1/42** *(2006.01)* **G01S 7/40** *(2006.01)*

(52) Cooperative Patent Classification (CPC):
**B60R 16/03; G01S 7/4047; G01S 13/931;
H01Q 1/02; H01Q 1/3233; H01Q 1/42**

(54) **SENSOR COVER FOR VEHICLES AND METHOD FOR HEATING SAID SENSOR COVER FOR VEHICLES**

SENSORABDECKUNG FÜR FAHRZEUGE UND VERFAHREN ZUM BEHEIZEN DER SENSORABDECKUNG FÜR FAHRZEUGE

COUVERCLE DE CAPTEUR POUR VÉHICULES ET PROCÉDÉ DE CHAUFFAGE DUDIT COUVERCLE DE CAPTEUR POUR VÉHICULES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**17.01.2024 Bulletin 2024/03**

(73) Proprietor: **Zanini Auto Grup, S.A.**
**08150 Parets del Vallès - Barcelona (ES)**

(72) Inventors:
• **TUTUSAUS CARRETÉ, Pol**
**08150 Parets del Vallès (Barcelona) (ES)**

• **CASADO ANDRÉS, Félix**
**08150 Parets del Vallès (Barcelona) (ES)**
• **LÓPEZ LAPEÑA, Oscar**
**08150 Parets del Vallès (Barcelona) (ES)**

(74) Representative: **Herrero & Asociados, S.L.**
**Edificio Aqua - Calle Agustín de Foxá, 4-10, 2ºA
28036 Madrid (ES)**

(56) References cited:
**EP-A1- 3 182 505      DE-A1- 102017 003 743
US-A1- 2013 277 352      US-A1- 2019 295 824**

## Description

### Field of the invention

The present invention relates to a sensor cover for vehicles, that covers one or more sensors placed in a grill assembly of a vehicle. The present invention also refers to a method for heating said sensor cover for vehicles.

### Background of the invention

The automotive industry is constantly increasing the number of sensors which are able to sense the surroundings of the road vehicles. The higher quantity of sensors, their improved sensibility, and their capability to perform in harsh weather conditions allow to increase the levels of driver assistance toward Automated Driving Systems. This increases the safety of both the vehicle occupants and pedestrians, avoiding collisions and reducing fatalities.

Sensor covers are usually positioned in front of the sensors, protecting them of external influences and integrating them in the vehicle aesthetics, providing an attractive impression of the vehicle. In some cases, these sensor covers represent the car manufacturer's emblem logo.

The sensors may be of different types, including radars, cameras and lidars, which operate at different frequency ranges. Such sensor covers are named radomes in the case of hiding and protecting radar sensors.

We may divide the sensor cover in two areas, one of them is the Field of View (FoV), which is transparent to electromagnetic waves from or to the sensor. This area has high restrictions in materials and dimensions to perform correctly. The rest of the sensor cover has more freedom in its construction, allowing fixation elements, electric connectors or other devices that would affect the sensor performance if they would be present within the FoV.

Sensor covers functionalities are being increased to ensure the correct transmitting/receiving performance of the sensor in adverse weather conditions. One of the most relevant added functionalities is their capability to remove the ice or snow layer which might be deposited on the FoV of the sensor cover, significantly affecting to the waves emitted or received by the sensor.

In these cases, the sensor cover includes a heating element, which is powered by the electric system of the vehicle and is capable to melt the deposited ice or snow, eliminating them.

This heating element may take the form of a conductive wire, usually made with a copper alloy, which is routed in the form of a heating layer. Alternatively, other systems may provide a layer with a specified electric resistance by using elements such as PEDOTs or carbon nanotubes. All these heating elements must ensure enough transparency at the operating frequency of the sensor since they have to be used, at least, in the FoV area of the sensor cover.

The goal of a fast removal of deposited ice or snow by increasing the heating power may lead to damage the materials of the sensor cover because of overheating. The material damage may degrade the transmission performance or the aesthetics of the sensor cover.

On the other side, a too conservative heating approach to protect the materials of the sensor cover may lead to an underheating situation, where the layer of snow or ice is not removed or it takes too much time to eliminate it, compromising the performance of the sensor function.

In order to avoid these problems, more evolved sensor covers are incorporating temperature detection elements which, in one way or another, help to modulate the electric energy that is supplied to the heating system. These temperature detection elements, which may take the form of thermistors, are not transparent at the operating frequency of the sensors.

As a consequence, they must be positioned out of the FoV, which is the area where the temperature monitoring is more desired. This system loses reliability in dynamic situations where the temperature within the sensor cover changes along the time.

The use of temperature detection elements may be done only on one point or on a limited number of points, positioned all of them out of the FoV, which is the area of greatest interest.

The temperature detection element is usually surrounded by the plastic material of the sensor cover. As a consequence, due to the low thermal conductivity of the plastic material, there is a temperature offset between the hottest temperature produced at the heating element and the temperature measured by the temperature detection element. Additionally, a dynamic situation may cause a fast temperature change at a given point of the heating element which is detected with a time lag by the temperature detection element.

JP 2019168265 A discloses a decorative part with a thermostat that senses the overheating of the base material and acts as a overheat prevention element, shutting off the energization of the heating element.

EP 3648248 A1, of the same applicant than the present application, also discloses a radome for vehicles comprising a temperature detection element integrated in the radome between the frontal surface and the rear surface. It is in communication with the power source to modulate the supplied energy.

CN 111812593 A discloses a radome with an external connection structure which includes a printed circuit board with a thermistor that detects the temperature and acts on the energy supply.

DE102017003743A1 discloses a protective cover for a sensor for detecting the surroundings of a vehicle, comprising a heating element with at least two heating wires. The at least two heating wires of a transmitter and receiver unit of the sensor are arranged orthogonally to one another.

EP3182505A1 discloses a radar antenna, comprises a radar source configured to transmit a radar signal having a first polarisation in a transmission direction, a transformer having at least three layers spaced apart along the transmission direction, each of the at least three layers comprising an electrically conductive structure such to transform the radar signal into a radar signal having a second polarisation, such as from a linear polarized radar signal into a circular or vertical polarized radar signal and a substantially radar signal transparent climate shell arranged on the transformer.

US2019295824A1 discloses a semiconductor and micromechanical substrate processing using a substrate carrier in a chamber and, in particular, measuring the temperature of the substrate carrier using an array of heater elements.

## Disclosure of the invention

The conductive materials usually show a change of its own electric resistance, depending on their temperature, and this change can be characterized. The present application is based on the measurement of the electric resistance variation suffered by the heating element of the sensor cover as a consequence of its own temperature change during the heating process.

This is a direct measure of the whole heating element, not an indirect measure of one of its points, overcoming the drawbacks of existing solutions and mentioned prior art. The resulting temperature control device based on this concept may provide a more precise and reactive control of the sensor cover temperature.

The sensor cover, and the method for heating said sensor cover according to the present invention is defined in the independent claims. The dependent claims include optional additional features.

The sensor cover, and the method according to the present application provides, among others, the following advantages:
The measurement is done directly on a known characteristic of the heating element (the hottest element of the sensor cover) instead of doing it indirectly through the plastic material.

The measurement includes the detection of the temperature in the FoV area of the sensor cover, instead of doing it in points out of the FoV.

The temperature offset between the hottest heating element and the temperature detection element is eliminated.

The time lag between the temperature changes at the hottest heating element and at the temperature detection element caused by the thermal inertia due to the low thermal conductivity between them is eliminated.

A maximum operating temperature (to avoid overheating and sensor cover damage) and a minimum operating temperature (to avoid underheating and lack of ice or snow melting) may be more precisely set because the temperature offset and the time lag of the previous systems were variable and depending on external environmental conditions and car speed, causing uncertainty, and not allowing compensation.

The temperature control device acts as a Pulse Width Modulation (PWM), delivering the maximum power to the heating element without the need of any PWM of the Electronic Control Unit (ECU) which can only manage the power delivered to the heating element based on external factors like the car speed or external temperature. This reduces to a minimum the time needed to melt the snow or ice.

The disclosed temperature control device is compatible with an existing PWM of the vehicle ECU (Electronic Control Unit).

False overheating detection that is caused by the low thermal conductivity of the surrounding of the traditional temperature detection elements may be avoided.

Since it controls the temperature of the heating element as a whole, it may be located remotely. The disclosed temperature control device may be integrated in the sensor cover, out of its FoV, or as an external module positioned between the vehicle electric system and the sensor cover. This allows to upgrade existing sensors covers, which don't include any temperature control, with a safety a device like the one described herein.

## Brief description of the drawings

For better understanding of what has been disclosed, some drawings in which, schematically and only by way of a non-limiting example, a practical case of embodiment is shown.

Fig. 1 is a fragmentary isometric view of a vehicle having a sensor cover constructed in accordance with and embodying the invention positioned within a grill assembly and a sensor positioned behind the sensor cover.

Fig. 2 is a side view of a sensor cover, where the sensor, its Field of View (FoV), the heating element and connector may be seen.

Fig. 3 is a thermal map of a heated sensor cover at a given depth.

Fig. 4 is a schematic side view of the igloo effect on a sensor cover.

Fig. 5 is a rear view of a sensor cover with a first distribution of multiple heating zones related to the Field of View.

Fig. 6 is a side view of a sensor cover with a second distribution of multiple heating zones related to the Field of View.

Fig. 7 is a graph with the evolution in time of the temperature on a given point of a heating element and on the temperature detection element of a temperature control system of the state of the art.

Fig. 8 is a graph of the electric resistance change of a conductive wire.

Fig. 9 is an electric scheme of the temperature control device based on electric resistance change proposed in current application.

Fig. 10 is an electric scheme of high precision four-point electric resistance measurement.

Fig. 11 shows the output of the disclosed temperature control device in different conditions of temperature of the heating element and existence of an external Pulse Width Modulation (PWM).

Fig. 12 shows the output of the disclosed temperature control device in different conditions of temperature of the heating element and absence of an external Pulse Width Modulation (PWM).

Fig. 13 shows an external module with the disclosed temperature control device.

Fig. 14 shows an alternative embodiment including a Wheatstone bridge.

**Description of a preferred embodiments**

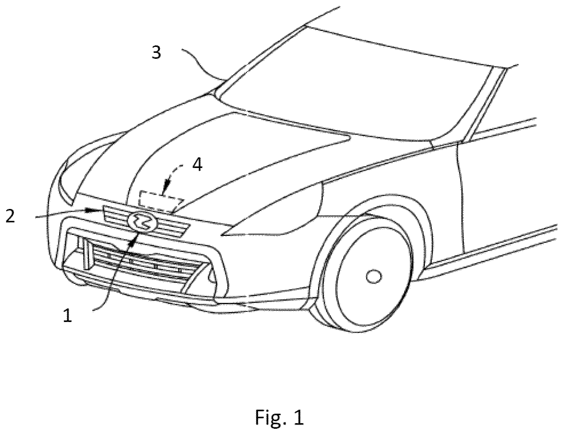

With reference now in detail to the drawings, wherein like numerals will be employed to denote like components throughout, as illustrated in Fig. 1, the reference numeral 1 denotes generally a sensor cover constructed in accordance with and embodying the invention. Positioned within the vehicle (3) behind and in registration with the sensor cover (1) is a sensor (4).

The sensor cover shown in the figure is configured for mounting within a grill assembly (2) of the motor vehicle (3). The position and appearance of this sensor cover (1) usually corresponds to a radome, protecting a radar. However, the proposed concept is applicable to other types of sensors covers that may be differently positioned and protecting other types of sensors.

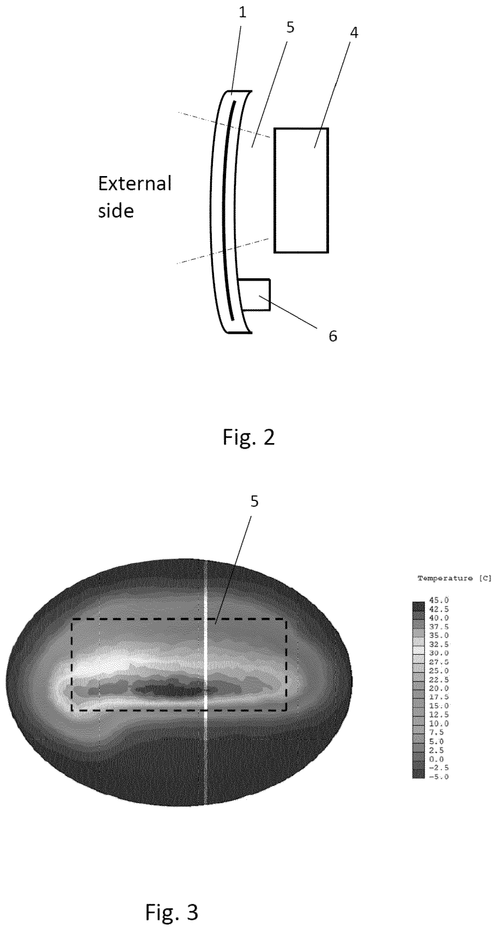

Fig. 2 shows a side view of the sensor cover (1), where the sensor (4) is positioned behind the sensor cover (1) with respect to an external observer. A side view of the Field of View (5) is also represented and its intersection with the sensor cover (1).

The Field of View (5) is the area transparent to the electromagnetic transmitted waves from or to the sensor (4). The electric connector (6) is used to electrically power a heating element (7) of the sensor cover (1) from the electric system of the vehicle.

A thermal map of the heated sensor cover is shown in Fig. 3. It corresponds to a given vehicle speed and external temperature and is represented at a given depth of the sensor cover. As it may be seen, the temperature is not uniformly distributed. The Field of View (5) on the sensor cover (1) is represented as limited by a dashed line.

The state-of-the-art systems to control the temperature at a sensor cover (1) are based on one or several temperature detection elements that, as mentioned, cannot be positioned within the Field of View (5). This will provide just a partial temperature information, not including the area of greatest interest which is the Field of View (5).

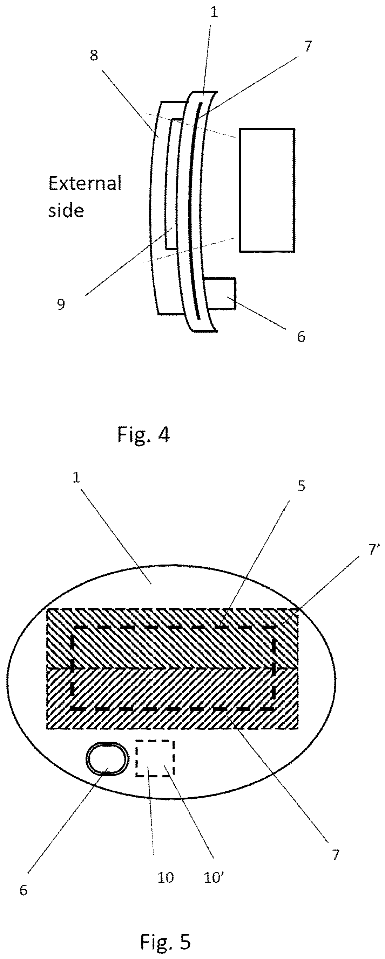

Fig. 4 schematically shows the heating element (7) of the sensor cover. The heating element (7) may be formed by one or several thin conductive wires that act as electric resistances which are powered from the electric system of the car through the electric connector (6).

Alternatively, the heating element (7) may be formed by a layer containing elements such as PEDOTs, carbon nanotubes or others with a specified electric resistance. The function of the heating element (7) is to warm up and melt the ice or snow layer (8) that may be deposited on the sensor cover (1) under given climate conditions.

Fig. 4 also schematically shows (not to scale) an undesired effect that may happen which is named "igloo effect". It happens when the melting of just a part of the ice or snow layer (8) in contact with the external face of the sensor cover (1) generates an air chamber (9). This air chamber (9) acts as a thermal insulation, making more difficult the melting of the rest of the ice or snow layer (8) and causing an additional overheating of the sensor cover (1).

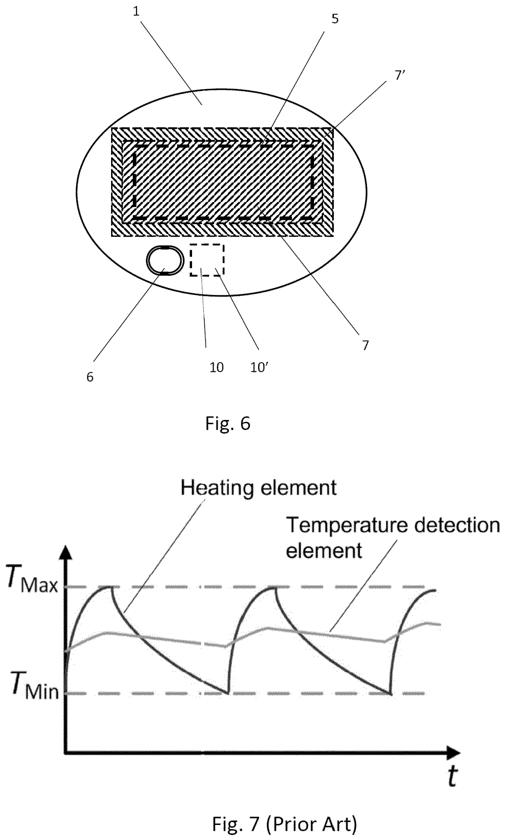

In order to improve the melting process of the ice or snow layer (8), it may be desired to split the heating element (7) in several heating elements, indicated by numeral references 7 and 7' in Figs. 5 and 6, each one covering a different heating zone, independently powered.

Fig. 5 and Fig. 6 show possible configurations of multiple heating zones, independently powered, seen from the rear side of the sensor cover (1). The Field of View (5) on the sensor cover (1) is represented as limited by a dashed line.

In addition to the electric connector (6), it may be seen a possible location of a temperature control device (10), and optional additional temperature control devices, whose configuration and operation is explained later on.

It may be seen that both the electric connector (6) and the temperature control device(s) (10) are positioned out of the Field of View (5). Otherwise, they might degrade the performance of the sensor (4).

Several configurations of the multiple heating zones may be considered. Two examples with two heating zones are explained here, although different ones may be designed.

Fig. 5 shows an example with the Field of View (5) covered by two heating elements (7, 7') defining two different heating zones.

Fig. 6 shows another example with two heating elements (7, 7'), where the heating zone of the first heating element (7) covers the Field of View (5) and the heating zone of the second heating element (7') covers an area around the Field of View (5).

The heating element at each heating zone may have different material, configuration, and heating power density, allowing different heating strategies for each independent heating zone. The temperature at each heating independent heating element (7, 7') may be controlled by an independent temperature control device (10).

As previously commented, the disclosed system based on measuring the electric resistance change of the heating element (7) offers different advantages compared to the state-of-the-art temperature detection element known until now.

The behavior of these last ones is shown in the graph of Fig. 7. It represents the evolution of temperature along the time of a point of the heating element 7 (hottest possible temperature) and the one perceived by the temperature detection element. The objective is that the maximum temperature reached at any point of the heating element (7), $T_{max}$, is below a limit temperature depending on the plastic material surrounding the heating element (7) in order to prevent its degradation.

It may be seen that when power is supplied to the heating element (7), its temperature increases much faster than the one detected by the temperature detection element. This element must trigger the shut off operation of the power supply when $T_{max}$ is reached. It starts then a temperature decrease process that is, again, faster at the heating element (7) than the one detected by the temperature detection element. This graph shows the existence of a temperature offset and a time lag between the temperatures at both points. Once a predefined $T_{Min}$ at the heating element is achieved, the power must be supplied again, initiating the next heating cycle.

This state-of-the-art system is controlling just one point of the heating element (7) which, as commented, cannot be located within the Field of View (5). Several temperature detection elements might be defined controlling several points of the heating element (7) for better accuracy. However, all of them should be positioned out of the Field of View (5) and all of them would show the same drawbacks of temperature offset and time lag.

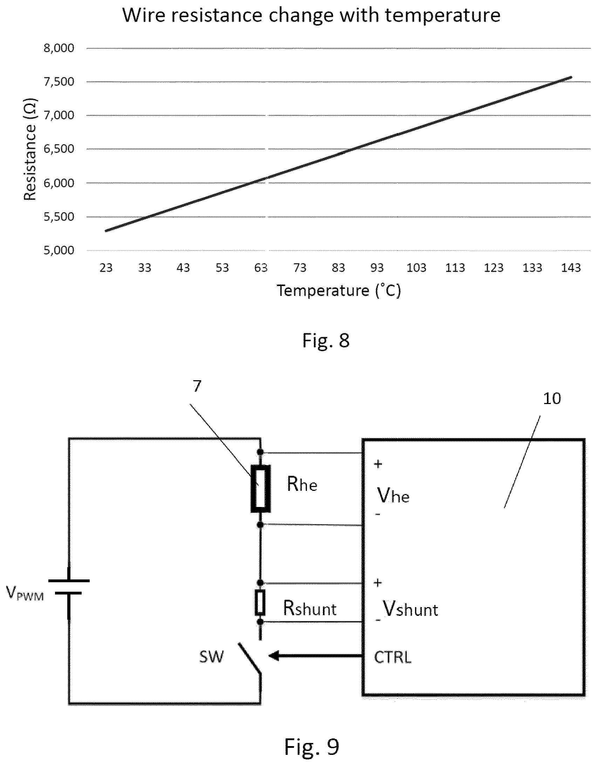

The heating element (7) of the sensor cover (1) has an electric resistance, named $R_{he}$, which varies with its own temperature changes. This phenomenon is directly linked to the characteristics of the material used on the heating element (7). The graph of Fig. 8 represents how the electric resistance of the conductive wire of an actual heating element (7) changes as a function of its temperature. This case of conductive wire shows a linear increment of its electric resistance with its temperature increase. Other materials used for a heating element (7) may show a decrease of its electric resistance with their temperature increase, as it is PEDOTs case. It may happen, too, that the relation between both variables, electric resistance, and temperature, is not linear in the temperature range under consideration.

The electric resistance of the heating element (7) may be measured and used to determine its temperature. The measured electric resistance will be representative of the considered heating element (7) as a whole, including the part of the heating element (7) that is within the Field of View (5). This measure is really representative of the distribution of temperatures at the heating element (7), it is not affected by a temperature offset because of the distance between the heating generation point and the temperature detection element and it is not affected by a time lag due to thermal inertia between both points.

It may be established the value of electric resistance, $R_{he}$, of each heating element (7) corresponding to the specified $T_{max}$ of the hottest point of the heating element (7), named $R_{he}(T_{Max})$, and the electric resistance, $R_{he}$, corresponding to the specified $T_{Min}$, named $R_{he}(T_{Min})$.

A basic scheme of the disclosed temperature control device (10) based on controlling the change on the variable

electric resistance $R_{he}$ of the heating element (7) is shown in Fig. 9. The heating electric circuit includes a resistance, $R_{shunt}$, connected in series with the heating element (7). $R_{shunt}$ is of a known given value and very stable at the temperature range it will operate. The temperature control device (10) measures the voltage, $V_{shunt}$, at the poles of $R_{shunt}$. This allows to know the circulating intensity, $I_{mea}$, at the heating element (7).

An alternative method to know the circulating intensity, $I_{mea}$, is through the measurement of the generated magnetic field. This may be done with a current sensor based on the Hall effect or through a fluxgate magnetic sensor.

The temperature control device (10) measures the voltage, $V_{he}$, at the poles of the electric resistance $R_{he}$. This allows to know the electric resistance, $R_{he}$, of the heating element (7) at any moment and which is dependent on its temperature at this same moment. This value of $R_{he}$ is compared with the pre-established values of $R_{he}(T_{Max})$ and $R_{he}(T_{Min})$ and the switch (SW) is activated accordingly.

If the heating element (7) has an electric resistance which increases with temperature increase, the switch will be switched OFF when $R_{he} > R_{he}(T_{Max})$ and the switch will be switched ON when $R_{he} < R_{he}(T_{Min})$. If the heating element (7) has an electric resistance which decreases with temperature increase, the switch will be switched OFF when $R_{he} < R_{he}(T_{Max})$ and the switch will be switched ON when $R_{he} > R_{he}(T_{Min})$.

Since the whole control system is based on accurate measurements of electric resistances, it is advisable to use the known high precision four-point electric resistance measurement to monitor the electric resistance $R_{he}$ of the heating element (7).

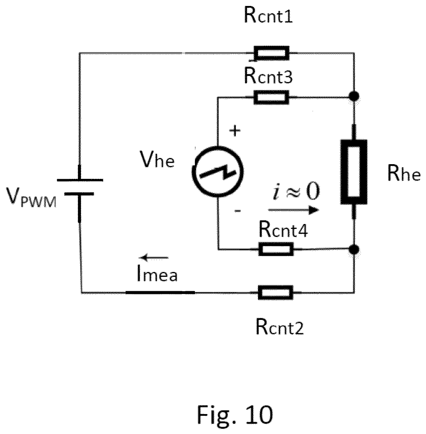

Fig. 10 describes how this measurement technique is applied. It avoids any influence of the variability on the transitions from the heating element (7) to the electric connector (6), represented by the resistances $R_{cnt1}$ and $R_{cnt2}$. This measurement system avoids that the voltage drops at $R_{cnt1}$ and $R_{cnt2}$ caused by the current intensity $I_{mea}$ might influence the evaluation of the change in electric resistance $R_{he}$. $R_{cont3}$ and $R_{cont4}$ don't cause any relevant influence in the measurement because the current circulating through them is several orders of magnitude lower than $I_{mea}$.

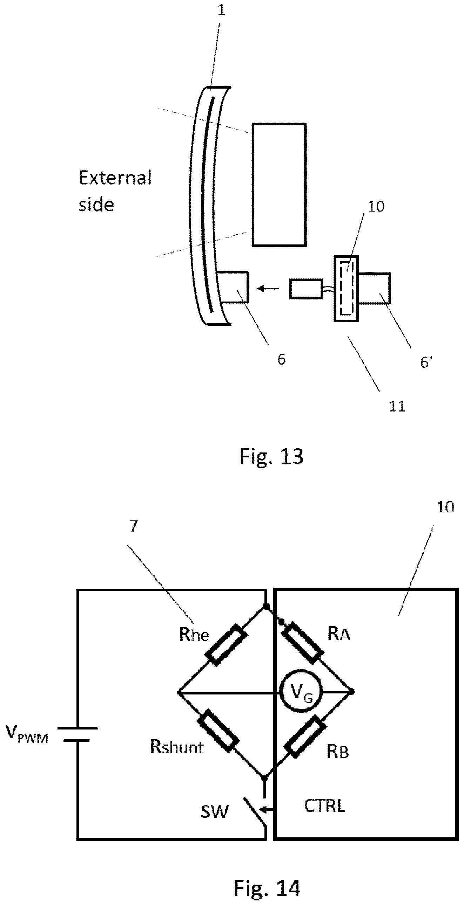

An alternative method to know electric resistance $R_{he}$ is by including a Wheatstone bridge, which is shown on Fig. 14. This type of circuit has the ability to provide extremely accurate measurements. If the internal electrical resistance of the Voltage meter $V_G$ is high enough to consider negligible the electrical intensity through it, the $R_{he}$ may be computed from the three other resistor values $R_{shunt}$, $R_A$ and $R_B$ and the input voltage $V_{PWM}$ through the following formula:

$$R_{he} = (R_A \times V_{PWM} + (R_A + R_B) \times V_G) / (R_B \times V_{PWM} - (R_A + R_B) \times V_G) \times R_{shunt,}$$

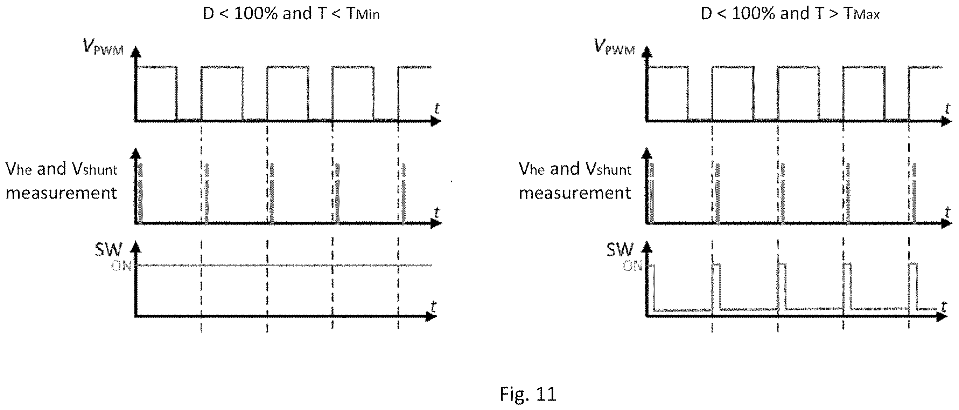

Fig. 11 shows the output of the disclosed temperature control device (10) in different conditions of temperature of the heating element (7) and existence of an external Pulse Width Modulation (PWM). The PWM usually provides a duty cycle lower than 100% with a given cycle frequency. The input voltage rise from the PWM triggers the measurement at the temperature control device (10) of $V_{he}$ and $V_{shunt}$.

It must be noted a minimum duty cycle (for instance, 1%) is needed where the switch must be ON in order to perform the measurements. Based on these measurements, it switches ON the heating element (7) if its temperature is lower than the specified $T_{Min}$, as shown on the left of the figure. Based on these measurements, it switches OFF the heating element (7) if its temperature is higher than the specified $T_{max}$, as shown on the right of the figure.

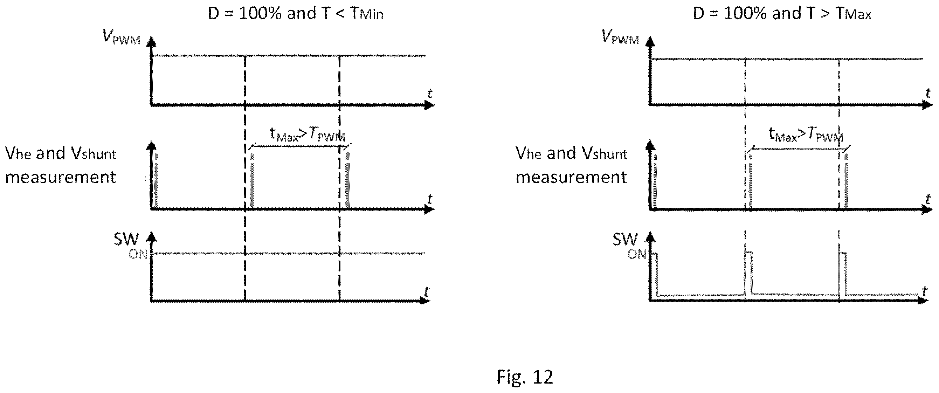

Fig. 12 shows the output of the disclosed temperature control device (10) in different conditions of temperature of the heating element (7) and absence of an external Pulse Width Modulation (PWM). In this case, the duty cycle is constant at 100% and the temperature control device must generate its own periodical pulse to trigger the measurement of $V_{he}$ and $V_{shunt}$.

The periodical pulse generated by the temperature control device (10) will have a lower frequency than the usual cycles defined by the PWMs. This allows to wait the input voltage rise from the PWM, if it exists. Otherwise, it generates its own pulse. Based on these measurements, it switches ON the heating element (7) if its temperature is lower than the specified $T_{Min}$, as shown on the left of the figure. Based on these measurements, it switches OFF the heating element (7) if its temperature is higher than the specified $T_{max}$, as shown on the right of the figure.

As previously commented, since there is no need of temperature detection elements located close to the heating element, the disclosed temperature control device (10) may be located in a remote position.

Fig. 13 shows an external module (11) which internally contains the temperature control device (10). This external module (11) may be externally connected to the electric connector (6) of the sensor cover. On the other side, it may contain its own electric connector (6') similar to the electric connector (6) of the sensor cover (1). This allows to use the external module (11) as an independent device, electrically connected between the sensor cover (1) and the electric system of the vehicle.

The external module (11) may be considered as an optional accessory to be used on some vehicles equipped with a heated sensor cover. It may also be used to overcome the fact that, due to its dimensions, cannot be integrated in some small sensor covers.

Although reference has been made to specific embodiments of the invention, it is apparent to a person skilled in the art that the described sensor cover and method are susceptible of numerous variations and modifications, and that all the details mentioned can be replaced by other technically equivalents, without departing from the scope of protection defined by the appended claims.

**Claims**

1. Sensor cover for vehicles, comprising:

   - at least one heating element (7) that heats a surface of the cover;
   - a field of view (FOV), that is an area transparent to electromagnetic waves transmitted from or to the sensor;
   - an electric connector (6) that connects the at least one heating element (7) with a power source; and
   - at least one control device (10) that controls de operation of the at least one heating element (7);

   **characterized in that**:

   - the at least one heating element (7) generates a variable electrical resistance depending on the variation of its temperature, that is detected by the at least one control device (10), said at least one control device (10) powering on or off the at least one heating element (7) according to the electric resistance detected by the at least one control device (10), and

   wherein the measurements of the control device (10) are triggered at the control device (10) by a Pulse Width Modulation when said Pulse Width Modulation has a duty cycle lower than 100% or by a periodical pulse generated by said at least one control device (10) when said Pulse Width Modulation has a duty cycle of 100%.

2. Sensor cover for vehicles according to claim 1, wherein, if the electric resistance of the at least one heating element (7) increases when its temperature increases, the at least one control device (10):

   - switches off the at least one heating element (7) when the detected electric resistance is greater than an electric resistance corresponding to a maximum temperature of the heating element (7), and
   - switches on the at least one heating element (7) when the detected electric resistance is lower than an electric resistance generated at a minimum predetermined temperature.

3. Sensor cover for vehicles according to claim 1, wherein, if the electric resistance of the at least one heating element (7) decreases when its temperature increases, the at least one control device (10):

   - switches off the at least one heating element (7) when the detected electric resistance is lower than an electric resistance generated at a maximum temperature of the hottest point of the heating element (7), and
   - switches on the at least one heating element (7) when the detected electric resistance is greater than an electric resistance generated at a minimum predetermined temperature.

4. Sensor cover for vehicles according to any one of the previous claims, wherein the electric resistance of the at least one heating element (7) is measured by the control device (10) measuring the voltage at the poles of the heating element (7).

5. Sensor cover for vehicles according to any one of the previous claims, wherein the circulating intensity at the at least one heating element (7) is measured by the control device (10) measuring the voltage at the poles of a resistance ($R_{shunt}$) connected in series with the at least one heating element (7).

6. Sensor cover for vehicles according to any one of claims 1-4, wherein the circulating intensity at the at least one heating element (7) is measured by the control device (10) measuring the magnetic field generated by the intensity with a current sensor based on the Hall effect or through a fluxgate magnetic sensor.

7. Sensor cover for vehicles according to any one of the previous claims, wherein a four-point electric resistance measurement method is used to measure the electric resistance of the at least one heating element (7) to avoid the influence of other existing resistances ($R_{cnt1}$, $R_{cnt2}$) connected in series with the at least one heating element (7).

8. Sensor cover for vehicles according to any one of claims 1-6, wherein a Wheatstone bridge is used to measure the electric resistance of the at least one heating element (7).

9. Sensor cover for vehicles according to any one of the previous claims, wherein the at least one heating element (7) is switched on and off by a switch (SW) controlled by the at least one control device (10).

10. Sensor cover for vehicles according to any one of the previous claims, wherein it comprises two or more heating elements (7, 7'), each controlled by a different control device (10).

11. Sensor cover for vehicles according to any one of the previous claims, wherein the electric connector (6) and the one or more control devices (10) are placed outside the field of view (FOV).

12. Method for heating a sensor cover for vehicles, the sensor cover comprising:

- at least one heating element (7) that heats a surface of the cover;
- a field of view (FOV), that is an area transparent to electromagnetic waves transmitted from or to the sensor;
- an electric connector (6) that connects the at least one heating element (7) with a power source; and
- at least one control device (10) that controls de operation of the at least one heating element (7);

characterized in that the method comprises the following steps:

- detecting an electric resistance that is variable with a change of temperature generated by the at least one heating element (7) by the at least one control device (10), and
- powering on or off the at least one heating element (7) according to the electric resistance detected by the at least one control device (10);

wherein the measurements of the control device (10) are triggered at the control device (10) by a Pulse Width Modulation when said Pulse Width Modulation has a duty cycle lower than 100% or by a periodical pulse generated by said at least one control device (10) when said Pulse Width Modulation has a duty cycle of 100%.

13. Method for heating a sensor cover for vehicles according to claim 12, wherein, if the electric resistance of the at least one heating element (7) increases when its temperature increases, the at least one control device (10):

- switches off the at least one heating element (7) when the detected electric resistance is greater than an electric resistance corresponding to a maximum temperature of the heating element (7), and
- switches on the at least one heating element (7) when the detected electric resistance is lower than an electric resistance generated at a minimum predetermined temperature.

14. Method for heating a sensor cover for vehicles according to claim 12, wherein, if the electric resistance of the at least one heating element (7) decreases when its temperature increases, the at least one control device (10):

- switches off the at least one heating element (7) when the detected electric resistance is lower than an electric resistance generated at a maximum temperature of the hottest point of the heating element (7), and
- switches on the at least one heating element (7) when the detected electric resistance is greater than an electric resistance generated at a minimum predetermined temperature.

**Patentansprüche**

1. Sensorabdeckung für Fahrzeuge, umfassend:

- mindestens ein Heizelement (7), das eine Oberfläche der Abdeckung beheizt;
- ein Sichtfeld (FOV), das ein transparenter Bereich für elektromagnetische Wellen ist, die von oder zu dem Sensor übertragen werden;
- einen elektrischen Steckverbinder (6), der das mindestens eine Heizelement (7) mit einer Stromquelle verbindet; und
- mindestens eine Steuervorrichtung (10), die den Betrieb des mindestens einen Heizelements (7) steuert;

**dadurch gekennzeichnet, dass**:

- das mindestens eine Heizelement (7) einen variablen elektrischen Widerstand erzeugt, der von der Änderung seiner Temperatur abhängt und von der mindestens einen Steuervorrichtung (10) erfasst wird, wobei die mindestens eine Steuervorrichtung (10) das mindestens eine Heizelement (7) entsprechend dem von der mindestens einen Steuervorrichtung (10) erfassten elektrischen Widerstand ein- oder ausschaltet, und

wobei die Messungen der Steuervorrichtung (10) an der Steuervorrichtung (10) durch eine Pulsweitenmodulation ausgelöst werden, wenn die Pulsweitenmodulation einen Tastgrad von weniger als 100 % aufweist, oder durch einen periodischen Impuls, der von der mindestens einen Steuervorrichtung (10) erzeugt wird, wenn die Pulsweitenmodulation einen Tastgrad von 100 % aufweist.

2.  Sensorabdeckung für Fahrzeuge gemäß Anspruch 1, wobei, wenn der elektrische Widerstand des mindestens einen Heizelements (7) bei steigender Temperatur zunimmt, die mindestens eine Steuervorrichtung (10):

    - das mindestens eine Heizelement (7) ausschaltet, wenn der erfasste elektrische Widerstand größer ist als ein elektrischer Widerstand, der einer maximalen Temperatur des Heizelements (7) entspricht, und
    - das mindestens eine Heizelement (7) einschaltet, wenn der erfasste elektrische Widerstand niedriger ist als ein elektrischer Widerstand, der bei einer minimalen vorbestimmten Temperatur erzeugt wird.

3.  Sensorabdeckung für Fahrzeuge nach Anspruch 1, wobei, wenn der elektrische Widerstand des mindestens einen Heizelements (7) bei steigender Temperatur abnimmt, die mindestens eine Steuervorrichtung (10):

    - das mindestens eine Heizelement (7) ausschaltet, wenn der erfasste elektrische Widerstand geringer ist als ein elektrischer Widerstand, der bei einer maximalen Temperatur des heißesten Punkts des Heizelements (7) erzeugt wird, und
    - das mindestens eine Heizelement (7) einschaltet, wenn der erfasste elektrische Widerstand größer ist als ein elektrischer Widerstand, der bei einer minimalen vorgegebenen Temperatur erzeugt wird.

4.  Sensorabdeckung für Fahrzeuge gemäß einem der vorherigen Ansprüche, wobei der elektrische Widerstand des mindestens einen Heizelements (7) durch die Steuervorrichtung (10) gemessen wird, die die Spannung an den Polen des Heizelements (7) misst.

5.  Sensorabdeckung für Fahrzeuge nach einem der vorhergehenden Ansprüche, wobei die Zirkulationsintensität an dem mindestens einen Heizelement (7) durch die Steuervorrichtung (10) gemessen wird, die die Spannung an den Polen eines in Reihe mit dem mindestens einen Heizelement (7) geschalteten Widerstands ($R_{shunt}$) misst.

6.  Sensorabdeckung für Fahrzeuge nach einem der Ansprüche 1 bis 4, wobei die Zirkulationsintensität an dem mindestens einen Heizelement (7) durch die Steuervorrichtung (10) gemessen wird, die das durch die Intensität erzeugte Magnetfeld mit einem auf dem Hall-Effekt basierenden Stromsensor oder durch einen Fluxgate-Magnetsensor misst.

7.  Sensorabdeckung für Fahrzeuge gemäß einem der vorhergehenden Ansprüche, wobei ein Vierpunkt-Widerstandsmessverfahren verwendet wird, um den elektrischen Widerstand des mindestens einen Heizelements (7) zu messen, um den Einfluss anderer vorhandener Widerstände ($R_{cnt1}$, $R_{cnt2}$) zu vermeiden, die in Reihe mit dem mindestens einen Heizelement (7) geschaltet sind.

8.  Sensorabdeckung für Fahrzeuge gemäß einem der Ansprüche 1 bis 6, wobei eine Wheatstone-Brücke verwendet wird, um den elektrischen Widerstand des mindestens einen Heizelements (7) zu messen.

9.  Sensorabdeckung für Fahrzeuge gemäß einem der vorherigen Ansprüche, wobei das mindestens eine Heizelement (7) durch einen Schalter (SW) ein- und ausgeschaltet wird, der durch die mindestens eine Steuervorrichtung (10) gesteuert wird.

10. Sensorabdeckung für Fahrzeuge gemäß einem der vorhergehenden Ansprüche, wobei sie zwei oder mehr Heizelemente (7, 7') umfasst, die jeweils von einer anderen Steuervorrichtung (10) gesteuert werden.

11. Sensorabdeckung für Fahrzeuge gemäß einem der vorhergehenden Ansprüche, wobei der elektrische Steckverbinder (6) und die eine oder mehreren Steuervorrichtungen (10) außerhalb des Sichtfeldes (FOV) angeordnet sind.

12. Verfahren zum Beheizen einer Sensorabdeckung für Fahrzeuge, wobei die Sensorabdeckung umfasst:

- mindestens ein Heizelement (7), das eine Oberfläche der Abdeckung beheizt;
- ein Sichtfeld (FOV), das ein transparenter Bereich für elektromagnetische Wellen ist, die von oder zu dem Sensor übertragen werden;
- einen elektrischen Steckverbinder (6), der das mindestens eine Heizelement (7) mit einer Stromquelle verbindet; und
- mindestens eine Steuervorrichtung (10), die den Betrieb des mindestens einen Heizelements (7) steuert;

**dadurch gekennzeichnet, dass** das Verfahren die folgenden Schritte umfasst:

- Erfassen eines elektrischen Widerstands, der mit einer durch das mindestens eine Heizelement (7) erzeugten Temperaturänderung variiert, durch die mindestens eine Steuervorrichtung (10), und
- Einschalten oder Ausschalten des mindestens einen Heizelements (7) entsprechend dem von der mindestens einen Steuervorrichtung (10) erfassten elektrischen Widerstand;

wobei die Messungen der Steuervorrichtung (10) an der Steuervorrichtung (10) durch eine Pulsweitenmodulation ausgelöst werden, wenn die Pulsweitenmodulation einen Tastgrad von weniger als 100 % aufweist, oder durch einen periodischen Impuls, der von der mindestens einen Steuervorrichtung (10) erzeugt wird, wenn die Pulsweitenmodulation einen Tastgrad von 100 % aufweist.

13. Verfahren zum Beheizen einer Sensorabdeckung für Fahrzeuge gemäß Anspruch 12, wobei, wenn der elektrische Widerstand des mindestens einen Heizelements (7) bei steigender Temperatur zunimmt, die mindestens eine Steuervorrichtung (10):

- das mindestens eine Heizelement (7) ausschaltet, wenn der erfasste elektrische Widerstand größer ist als ein elektrischer Widerstand, der einer maximalen Temperatur des Heizelements (7) entspricht, und
- das mindestens eine Heizelement (7) einschaltet, wenn der erfasste elektrische Widerstand niedriger ist als ein elektrischer Widerstand, der bei einer minimalen vorbestimmten Temperatur erzeugt wird.

14. Verfahren zum Beheizen einer Sensorabdeckung für Fahrzeuge gemäß Anspruch 12, wobei, wenn der elektrische Widerstand des mindestens einen Heizelements (7) bei steigender Temperatur abnimmt, die mindestens eine Steuervorrichtung (10):

- das mindestens eine Heizelement (7) ausschaltet, wenn der erfasste elektrische Widerstand geringer ist als ein elektrischer Widerstand, der bei einer maximalen Temperatur des heißesten Punkts des Heizelements (7) erzeugt wird, und
- das mindestens eine Heizelement (7) einschaltet, wenn der erfasste elektrische Widerstand größer ist als ein elektrischer Widerstand, der bei einer minimalen vorgegebenen Temperatur erzeugt wird.

**Revendications**

1. Couvercle de capteur pour véhicules, comprenant :

- au moins un élément chauffant (7) qui chauffe une surface du couvercle ;
- un champ de vision (FOV), qui est une zone transparente aux ondes électromagnétiques transmises depuis ou vers le capteur ;
- un connecteur électrique (6) qui relie le au moins un élément chauffant (7) à une source d'alimentation ; et
- au moins un dispositif de commande (10) qui commande le fonctionnement dudit au moins un élément chauffant (7) ;

**caractérisé en ce que** :

- le au moins un élément chauffant (7) génère une résistance électrique variable en fonction de la variation de sa température, qui est détectée par au moins un dispositif de commande (10), ledit au moins un dispositif de commande (10) activant ou désactivant au moins un élément chauffant (7) en fonction de la résistance électrique détectée par le au moins un dispositif de commande (10), et

dans lequel les mesures du dispositif de commande (10) sont déclenchées au niveau du dispositif de commande (10) par une modulation de largeur d'impulsion lorsque ladite modulation de largeur d'impulsion a un rapport cyclique inférieur à 100 % ou par une impulsion périodique générée par ledit au moins un dispositif de commande (10) lorsque ladite modulation de largeur d'impulsion a un rapport cyclique de 100 %.

2. Couvercle de capteur pour véhicules selon la revendication 1, dans lequel, si la résistance électrique d'au moins un élément chauffant (7) augmente lorsque sa température augmente, le au moins un dispositif de commande (10) :

   - désactive le au moins un élément chauffant (7) lorsque la résistance électrique détectée est supérieure à une résistance électrique correspondant à une température maximale de l'élément chauffant (7), et
   - active le au moins un élément chauffant (7) lorsque la résistance électrique détectée est inférieure à une résistance électrique générée à une température minimale prédéterminée.

3. Couvercle de capteur pour véhicules selon la revendication 1, dans lequel, si la résistance électrique du au moins un élément chauffant (7) diminue lorsque sa température augmente, le au moins un dispositif de commande (10) :

   - désactive le au moins un élément chauffant (7) lorsque la résistance électrique détectée est inférieure à une résistance électrique générée à la température maximale du point le plus chaud de l'élément chauffant (7), et
   - active au moins un élément chauffant (7) lorsque la résistance électrique détectée est supérieure à une résistance électrique générée à une température minimale prédéterminée.

4. Couvercle de capteur pour véhicules selon l'une quelconque des revendications précédentes, dans lequel la résistance électrique d'au moins un élément chauffant (7) est mesurée par le dispositif de commande (10) qui mesure la tension aux pôles de l'élément chauffant (7).

5. Couvercle de capteur pour véhicules selon l'une quelconque des revendications précédentes, dans lequel l'intensité circulante au niveau d'au moins un élément chauffant (7) est mesurée par le dispositif de commande (10) mesurant la tension aux pôles d'une résistance ($R_{shunt}$) connectée en série avec le au moins un élément chauffant (7).

6. Couvercle de capteur pour véhicules selon l'une quelconque des revendications 1 à 4, dans lequel l'intensité circulante au niveau d'au moins un élément chauffant (7) est mesurée par le dispositif de commande (10) mesurant le champ magnétique généré par l'intensité à l'aide d'un capteur de courant basé sur l'effet Hall ou d'un capteur magnétique à fluxgate.

7. Couvercle de capteur pour véhicules selon l'une quelconque des revendications précédentes, dans lequel une méthode de mesure de résistance électrique à quatre points est utilisée pour mesurer la résistance électrique d'au moins un élément chauffant (7) afin d'éviter l'influence d'autres résistances existantes ($R_{cnt1}$, $R_{cnt2}$) connectées en série avec au moins un élément chauffant (7).

8. Couvercle de capteur pour véhicules selon l'une quelconque des revendications 1 à 6, dans lequel un pont de Wheatstone est utilisé pour mesurer la résistance électrique d'au moins un élément chauffant (7).

9. Couvercle de capteur pour véhicules selon l'une quelconque des revendications précédentes, dans lequel le au moins un élément chauffant (7) est activé et désactivé par un interrupteur (SW) commandé par le au moins un dispositif de commande (10).

10. Couvercle de capteur pour véhicules selon l'une quelconque des revendications précédentes, dans lequel il comprend deux ou plusieurs éléments chauffants (7, 7'), chacun étant commandé par un dispositif de commande différent (10).

11. Couvercle de capteur pour véhicules selon l'une quelconque des revendications précédentes, dans lequel le connecteur électrique (6) et le ou les dispositifs de commande (10) sont placés en dehors du champ de vision (FOV).

12. Procédé de chauffage d'un couvercle de capteur pour véhicules, le couvercle de capteur comprenant :

   - au moins un élément chauffant (7) qui chauffe une surface du couvercle ;
   - un champ de vision (FOV), c'est-à-dire une zone transparente aux ondes électromagnétiques transmises depuis ou vers le capteur ;
   - un connecteur électrique (6) qui relie au moins un élément chauffant (7) à une source d'alimentation ; et

- au moins un dispositif de commande (10) qui commande le fonctionnement dudit au moins un élément chauffant (7) ;

**caractérisé en ce que** le procédé comprend les étapes suivantes :

- détecter une résistance électrique qui varie en fonction d'un changement de température généré par le au moins un élément chauffant (7) par le au moins un dispositif de commande (10), et
- mettre sous tension ou hors tension ledit au moins un élément chauffant (7) en fonction de la résistance électrique détectée par ledit au moins un dispositif de commande (10) ;

dans lequel les mesures du dispositif de commande (10) sont déclenchées au niveau du dispositif de commande (10) par une modulation de largeur d'impulsion lorsque ladite modulation de largeur d'impulsion a un rapport cyclique inférieur à 100 % ou par une impulsion périodique générée par ledit au moins un dispositif de commande (10) lorsque ladite modulation de largeur d'impulsion a un rapport cyclique de 100 %.

13. Procédé de chauffage d'un couvercle de capteur pour véhicules selon la revendication 12, dans lequel, si la résistance électrique dudit au moins un élément chauffant (7) augmente lorsque sa température augmente, ledit au moins un dispositif de commande (10) :

- désactive le au moins un élément chauffant (7) lorsque la résistance électrique détectée est supérieure à une résistance électrique correspondant à une température maximale de l'élément chauffant (7), et
- active au moins un élément chauffant (7) lorsque la résistance électrique détectée est inférieure à une résistance électrique générée à une température minimum prédéterminée.

14. Procédé de chauffage d'un couvercle de capteur pour véhicules selon la revendication 12, dans lequel, si la résistance électrique du au moins un élément chauffant (7) diminue lorsque sa température augmente, le au moins un dispositif de commande (10) :

- désactive le au moins un élément chauffant (7) lorsque la résistance électrique détectée est inférieure à une résistance électrique générée à une température maximale du point le plus chaud de l'élément chauffant (7), et
- active le au moins un élément chauffant (7) lorsque la résistance électrique détectée est supérieure à une résistance électrique générée à une température minimale prédéterminée.

Fig. 1

Fig. 2

Fig. 3

Fig. 4

Fig. 5

Fig. 6

Fig. 7 (Prior Art)

## Wire resistance change with temperature

Fig. 8

Fig. 9

Fig. 10

Fig. 11

Fig. 12

Fig. 13

Fig. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019168265 A
- EP 3648248 A1
- CN 111812593 A
- DE 102017003743 A1
- EP 3182505 A1
- US 2019295824 A1